(19) Europäisches Patentamt
European Patent Office
Office européen des brevets

(11) Veröffentlichungsnummer : **0 143 906**
**B1**

(12) # EUROPÄISCHE PATENTSCHRIFT

(45) Veröffentlichungstag der Patentschrift : **16.06.87**

(51) Int. Cl.[4] : **C 08 L 69/00**, B 29 C 45/00, B 29 C 47/00

(21) Anmeldenummer : **84110174.4**

(22) Anmeldetag : **27.08.84**

(54) **Verfahren zur Herstellung stabilisierter Polycarbonat-Formkörper nach dem Entgasungsspritzguss--oder dem Entgasungsextrusionsverfahren.**

(30) Priorität : **06.09.83 DE 3332065**

(43) Veröffentlichungstag der Anmeldung : **12.06.85 Patentblatt 85/24**

(45) Bekanntmachung des Hinweises auf die Patenterteilung : **16.06.87 Patentblatt 87/25**

(84) Benannte Vertragsstaaten : **AT CH DE FR GB IT LI NL SE**

(56) Entgegenhaltungen :
**EP-A- 0 043 998**
**Die Akte enthält technische Angaben, die nach dem Eingang der Anmeldung eingereicht wurden und die nicht in dieser Patentschrift enthalten sind.**

(73) Patentinhaber : **BAYER AG**
**Konzernverwaltung RP Patentabteilung**
**D-5090 Leverkusen 1 Bayerwerk (DE)**

(72) Erfinder : **Dhein, Rolf, Dr.**
**Deswatinesstrasse 30**
**D-4150 Krefeld (DE)**
Erfinder : **Meier, Helmut-Martin, Dr.**
**Wodantal 28**
**D-4320 Hattingen (DE)**
Erfinder : **Meissner, Hans-Jürgen, Dr.**
**Bunsenstrasse 21**
**D-4150 Krefeld-Bockum (DE)**
Erfinder : **Kircher, Klaus, Dr.**
**Alfred-Kubin-Strasse 3**
**D-5090 Leverkusen (DE)**
Erfinder : **Oels, Udo, Dr.**
**3908 Saveil Drive**
**Baytown Texas 77521 (US)**

**EP 0 143 906 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Stabilisierung von Polycarbonaten mit Phosphinen, also gemäß neuerer Nomenklatur mit Phosphanen, ist aus der JP-OS 72 22 088 der Mitsubishi Gas Chemical Co. (Anmeldetag 28.05.1968, Publikationstag 21.06.1972) bekannt. Gemäß dieser Literaturstelle sind die damaligen Polycarbonatphosphitstabilisatoren nicht voll befriedigend. Offenbar ist jedoch bei der Einarbeitung von Phosphan-Stabilisatoren gemäß dieser JP-OS eine gute Trocknung der zu stabilisierenden Kunststoffe empfehlenswert.

Aus der DE-OS 22 06 720 ist ebenfalls die Stabilisierung von Polycarbonaten mit Phosphanen bekannt, wobei gegebenenfalls zusätzlich Epoxyverbindungen mitverwendet werden. Aus der US-PS 43 67 303, Spalte 6, bzw. der DE-OS 30 26 503, Seite 17 ist bekannt, daß die Stabilisierung mit Triphenylphosphan (Vergleichsversuche IB) derjenigen mit oxetangruppenhaltigem Phosphit (Vergleichsversuch IA) im Hinblick auf die Wärmealterung unterlegen ist.

Gemäß v. Hooren und Kaminski, Plastikverarbeiter Nr. 8/1980, Seiten 441 bis 446 « Entgasungsspritzgießen, ein Laborkonzept wird in die Praxis umgesetzt », kann außer anderen Kunststoffen auch mit oxetangruppenhaltigen Phosphiten stabilisiertes Polycarbonat (loc. cit. Seite 446, linke Spalte oben) nach dem Entgasungsspritzgußverfahren verarbeitet werden. Sowohl für das Entgasungsspritzgußverfahren als auch für das Entgasungsextrusionsverfahren ist die Entfeuchtung des zu verarbeitenden Kunststoffmaterials, hier des zu verarbeitenden Polycarbonats, über die Entgasungseinheit wichtig.

Die Entgasungseinheit unterscheidet sich von der Normalspritzgußeinheit durch die sogenannte Entgasungsöffnung und durch die Schneckengeometrie. Während die Normalspritzgußschnecke eine Einzugszone mit nachfolgender Kompressionszone und Ausstoßzone besitzt, besteht eine Entgasungseinheit aus einer Einzugszone, Kompressionszone, Dekompressionszone, einer 2. Kompressionszone und Ausstoßzone. Zu Beginn der Dekompressionszone befindet sich im Schneckenzylinder die Entgasungsöffnung, durch die in Folge der Entspannung der Schmelze der Entgasungsvorgang abläuft. Das Anlegen von Vakuum an der Entfasungsöffnung erübrigt sich, da der Dampfdruck des Wassers des nicht getrockneten Polycarbonats in der Dekompressionszone Drücke von 16 bis 130 bar erreicht. In der ersten Kompressionszone ist das Polycarbonat thermisch stark belastet und in der zweiten Kompressionszone tritt eine erneute thermische Beanspruchung ein.

Gegenüber der Normalspritzgußtechnik wird das Material also thermisch doppelt beansprucht. Eine ausführliche Beschreibung der Entgasungsmethode findet sich in obiger Literaturstelle.

Da im Entgasungsspritzguß- und Entgasungsextrusionsverfahren danach zum einen größere thermische Belastungen auftreten, zum anderen mit feuchtem Material gearbeitet wird, ist es überraschend, daß mit Phosphanen stabilisierte Polycarbonate sich nach diesen Verfahren mindestens ebensogut verarbeiten lassen wie mit oxetangruppenhaltigen Phosphiten stabilisierte Polycarbonate. Dies war in Anbetracht der Lehre der japanischen Offenlegungsschrift und des US-Patents nicht zu erwarten.

Gegenstand der Erfindung ist also ein Verfahren zur Herstellung von Polycarbonat-Formkörpern sowie von Formkörpern aus Legierungen, die Polycarbonate enthalten, durch Entgasungsspritzgießen oder Entgasungsextrudieren von thermoplastischen Polycarbonaten mit mittleren Molekulargewichten $\overline{M}w$ zwischen 10 000 und 100 000, die durch Umsetzung von Diphenolen mit Phosgen oder Diestern der Kohlensäure erhältlich sind, und die verzweigt sein können, dadurch gekennzeichnet, daß diese thermoplastischen Polycarbonate Phosphane der allgemeinen Formel $(R)_2PR_1$(I) in Mengen von 0,01 bis 0,1 Gew.% enthalten,

worin

R ein unsubstituiertes oder substituiertes $C_6$-$C_{14}$-Aryl ist und

$R_1$ = R oder ein unsubstituiertes oder substituiertes $C_1$-$C_{18}$-Alkyl ist.

Die Reste R in den Verbindungen der Formel (I) können sowohl gleich als auch verschieden sein.

Die erfindungsgemäß einzusetzenden Phosphane sollen einen Siedepunkt von mindestens 200 °C haben.

Die erfindungsgemäße Stabilisierung der Polycarbonat-Formkörper bewirkt eine Stabilisierung gegen den Einfluß von Wärme und/oder Sauerstoff.

In den Verbindungen der Formel (I) können die Arylreste R beispielsweise noch durch Alkylsubstituenten, Halogene oder OH substituiert sein. Die Alkylreste $R_1$ der Verbindungen der Formel (I) können geradkettig oder verzweigt sein. Sie können beispielsweise durch OH, Alkylcarboxy, Cyan oder Phenyl substituiert sein.

Erfindungsgemäß geeignete Phosphane der Formel (I) sind beispielsweise :

Triphenylphosphan, Diphenylbutylphosphan, Diphenyloctadecylphosphan, Tris-p-tolyl-phosphan, Tris-(p-nonylphenyl)-phosphan, Tris-naphthylphosphan, Diphenyl-(hydroxymethyl)-phosphan, Diphenyl-acetoxymethyl-phosphan, Diphenyl-(β-ethylcarboxy-ethyl)-phosphan, Tris-(p-chlorphenyl)-phosphan, Tris-(p-fluorphenyl)-phosphan, Diphenyl-benzyl-phosphan, Diphenyl-β-cyan-ethyl-phosphan, Diphenyl-(p-hydroxyphenyl)-phosphan, Diphenyl-1,4-dihydroxy-phenyl-2-phosphan und Phenyl-naphthyl-benzylphosphan.

Es können sowohl einzelne Verbindungen als auch Mischungen der genannten Phosphane verwendet werden.

Die Phosphane der Formel (I) sind literaturbekannt oder nach literaturbekannten Verfahren herstellbar.

Die erfindungsgemäß zu Formkörpern zu verarbeitenden thermoplastischen Polycarbonate sind die durch Umsetzung von Diphenolen mit Phosgen oder Diestern der Kohlensäure erhältlichen Polykondensate, wobei neben unsubstituierten Dihydroxydiarylalkanen auch solche geeignet sind, deren Arylreste in o- und/oder m-Stellung zur Hydroxylgruppe Methylgruppen oder Halogenatome tragen. Ebenso sind verzweigte Polycarbonate geeignet.

Die zu Formkörpern zu verarbeitenden Polycarbonate haben mittlere Molekulargewichte $\overline{M}w$ zwischen 10 000 und 100 000, vorzugsweise zwischen 20 000 und 40 000, ermittelt durch Messungen der rel. Viskosität in $CH_2Cl_2$ bei 25 °C und einer Konzentration von 0,5 Gew.-%. Geeignete Diphenole sind z. B. Hydrochinon, Resorcin, 4,4'-Dihydroxydiphenyl, Bis-(hydroxy-phenyl)-alkane, wie beispielsweise $C_1$-$C_8$-Alkylen- bzw. $C_2$-$C_8$-Alkylidenbisphenole, Bis-(hydroxyphenyl)-cycloalkane wie beispielsweise $C_5$-$C_{15}$-Cycloalkylen- bzw. $C_5$-$C_{15}$-Cycloalkyliden-bisphenole, Bis-(hydroxy-phenyl)-sulfide, -ether, -ketone, -sulfoxide oder -sulfone. Ferner α,α'-Bis-(hydroxy-phenyl)-diisopropylbenzol sowie die entsprechenden kernalkylierten bzw. kernhalogenierten Verbindungen. Bevorzugt sind Polycarbonate auf der Basis von Bis-(4-hydroxy-phenyl)-propan-2,2 (Bisphenol A), Bis-(4-hydroxy-3,5-dichlor-phenyl)-propan-2,2 (Tetrachlorbisphenol A), Bis-(4-hydroxy-3,5-dibromphenyl)-propan-2,2 (Tetrabrombisphenol A), Bis-(4-hydroxy-3,5-dimethyl-phenyl)-propan-2,2 (Tetramethylbisphenol A), Bis-(4-hydroxyphenyl)-cyclohexan-1,1 (Bisphenol Z) sowie auf der Basis von Dreikernbisphenolen wie α,α'-Bis-(4-hydroxyphenyl)-p-diisopropylbenzol.

Weitere für die Herstellung von Polycarbonaten geeignete Bisphenole sind in den US-Patenten 3 028 365, 2 999 835, 3 148 172, 2 970 131, 2 991 273, 3 271 367 und 2 999 846 beschrieben.

Die Zugabe der Phosphane läßt sich auf beliebige Weise, vorteilhaft beispielsweise im Zuge der Herstellung des Polycarbonates durchführen und insbesondere, da es sich um bei niederer Temperatur flüssige Stabilisatoren handelt, kontinuierlich gestalten. Dabei kann das Phosphan während der Endphase der Herstellung, in welcher das geschmolzene Polycarbonat kontinuierlich in einer Förderschnecke unter Vakuum vom Lösungsmittel befreit wird, kontinuierlich durch eine geeignete Förderpumpe eingegeben werden. Selbstverständlich ist es außerdem möglich, das Polycarbonat auch nach seiner Herstellung mit dem Phosphan zu stabilisieren, z. B. durch sogenanntes Auftrudeln ; diese Methode ist in den Beispielen dieser Anmeldung beschrieben und literaturbekannt.

Die einzusetzenden Phosphanmengen betragen zwischen 0,01 und 0,1 Gew.-%, bezogen jeweils auf Gesamtgewicht an thermoplastischem Polycarbonat und Phosphan.

Die erfindungsgemäß zu verarbeitenden Polycarbonate können außerdem die bekannten Zusätze wie beispielsweise Füllstoffe, Farbstoffe, Pigmente und/oder sonstige Stabilisatoren enthalten.

Die erfindungsgemäß zu verarbeitenden thermoplastischen Polycarbonate können auch mit anderen Thermoplasten in bekannter Weise abgemischt werden, beispielsweise mit ABS-Polymerisaten, Polystyrolen, Polyarylensulfonen oder Polyalkylenterephthalaten.

Die erfindungsgemäß verarbeiteten Polycarbonate finden besonders dort Anwendung, wo die hergestellten Formkörper einer längeren hohen Wärmebelastung ausgesetzt sind und zudem für alle Gegenstände für die eine hohe Lichtdurchlässigkeit verlangt wird. Das gilt bevorzugt für die Verwendung auf dem lichttechnischen Sektor, z. B. für Lampenabdeckungen oder Verglasungen mit Polycarbonatplatten.

Die in den Beispielen genannten Teile sind Gewichtsteile.

Herstellung eines Polycarbonats

In einem 3-Halskolben, ausgestattet mit Rührer und Gaseinleitungsrohr, werden 454 Teile 2,2-Bis-(p-hydroxyphenyl)-propan und 2,5 Teile p-tert.-Butylphenol in 1,5 l Wasser suspendiert und anschließend der Sauerstoff aus der Reaktionsmischung entfernt, indem man unter Rühren 15 Minuten lang Stickstoff durch die Reaktionsmischung leitet. Dann werden 355 Teile 45 %iger Natronlauge und 1 000 Teile Methylenchlorid zugegeben. Die Mischung wurd auf 25 °C abgekühlt. Unter Aufrechterhaltung dieser Temperatur durch Kühlen werden 237 Teile Phosgen während einer Zeitdauer von 120 Minuten zugegeben. Eine zusätzliche Menge von 75 Teilen einer 45 %igen Natronlauge wurd nach 15 bis 30 Minuten zugegeben bzw. nachdem die Phosgenaufnahme begonnen hat. Zu der entstandenen Lösung werden 1,6 Teile Triethylamin zugegeben und die Mischung weitere 15 Minuten gerührt. Eine hochviskose Losüng wird erhalten, deren Viskosität durch Zugabe von Methylenchlorid reguliert wird. Die wäßrige Phase wird abgetrennt. Die organische Phase wird mit Wasser salz- und alkalifrei gewaschen. Das Polycarbonat wird aus der gewaschenen Lösung isoliert und getrocknet. Das Polycarbonat hat eine relative Viskosität von 1,29 bis 1,30, gemessen in einer 0,5 %igen Lösung von Methylenchlorid bei 20 °C. Das entspricht ungefähr einem Molekulargewicht von 32 000. Das so gewonnene Polycarbonat wird extrudiert und granuliert.

Herstellung stabilisierter Polycarbonate und Verarbeitungsbedingungen

Das gemäß obiger Beschreibung hergestellte granulierte Polycarbonat wird gegebenenfalls mit den

in den Beispielen aufgeführten Stabilisatoren auf einem ZSK 32 Extruder bei 270 °C eincompoundiert. Die Produkte werden zu Breitstäben verspritzt und zwar a) auf einer Normalspritzgußanlage bei 300 °C Einstelltemperatur und b) auf einer Entgasungsanlage bei 295 °C (Düse), 290 °C, 275 °C, 295 °C Einstelltemperatur, was einer Massetemperatur von ca. 305 °C entspricht.

Vergleich 1

Zusammensetzung : Unstabilisiertes Polycarbonat

| Verarbeitungsart | $\Delta C_{YB}$ | Y (h) | $\Delta\Delta C_{YB}$ |
|---|---|---|---|
| N | 1,8 | 89,3 % | 1,4 |
| EG | 3,2 | 88,8 % | |

Vergleich 2

Zusammensetzung: Polycarbonat + 0,1 % 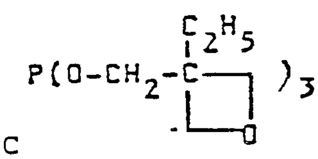

| Verarbeitungsart | $\Delta C_{YB}$ | Y (h) | $\Delta\Delta C_{YB}$ |
|---|---|---|---|
| N | 1,9 | 89,4 % | 0,8 |
| EG | 2,7 | 86 % | |

Vergleich 3 (wie Vergleich 2, anderer Produktansatz)

| Verarbeitungsart | $\Delta C_{YB}$ | Y (h) | $\Delta\Delta C_{YB}$ |
|---|---|---|---|
| N | 1,0 | - | 0,4 |
| EG | 1,4 | - | |

Vergleich 4

Zusammensetzung : Polycarbonat + 0,2 % $P(C_6H_5)_3$

| Verarbeitungsart | $\Delta C_{YB}$ | Y (h) | $\Delta\Delta C_{YB}$ |
|---|---|---|---|
| N | 2,0 | - | 0,6 |
| EG | 2,6 | - | |

Beispiel

Zusammensetzung : Polycarbonat + 0,1 % $P(C_6H_5)_3$

| Verarbeitungsart | $\Delta C_{YB}$ | Y (h) | $\Delta\Delta C_{YB}$ |
|---|---|---|---|
| N | 1,2 | - | 0,1 |
| EG | 1,3 | - | |

Erklärung der Symbole :

$\Delta C$
YB : + Gelbabweichung, -Blauabweichung nach FMC-II gemessen gegen Unbunt.

$\Delta\Delta C$
YB : $\Delta C_{YB}$ (Entgasungsspritzguß)-$\Delta$ $C_{YB}$ (Normalspritzguß)

Y (h) : Korrigierte Lichtdurchlässigkeit

N : Normalspritzguß

EG : Entgasungsspritzguß

FMC-II : Farbabstandsformel nach Friele, MacAdams und Chickering.

**Patentanspruch**

Verfahren zur Herstellung von Polycarbonat-Formkörpern dürch Entgasungsspritzgießen oder Entgasungsextrudieren von thermoplastischen Polycarbonaten mit mittleren Molekulargewichten $\overline{M}w$ zwischen 10 000 und 100 000, die durch Umsetzung von Diphenolen mit Phosgen oder Diestern der Kohlensäure erhältlich sind, und die verzweigt sein können, dadurch gekennzeichnet, daß diese thermoplastischen Polycarbonate Phosphane der allgemeinen Formel (I)

$$(R)_2PR_1 \qquad (I)$$

in Mengen von 0,01 bis 0,1 Gew.-%, enthalten, wobei
R ein unsubstituiertes oder substituiertes $C_6$-$C_{14}$-Aryl ist und
$R_1$ = R oder ein unsubstituiertes oder substituiertes $C_1$-$C_{18}$-Alkyl ist.

**Claim**

Process for the production of polycarbonate shaped articles by the vented injection moulding or vented extrusion of thermoplastic polycarbonates having average molecular weights $\overline{M}w$ between 10 000 and 100 000, which are obtainable by reacting diphenols with phosgene or diesters of carbonic acid, and which can be branched, characterised in that these thermoplastic polycarbonates contain phosphanes of the general formula (I)

$$(R)_2PR_1 \qquad (I)$$

in quantities of 0,01 to 0,1 % by weight, wherein
R is an unsubstituted or substituted $C_6$-$C_{14}$-aryl and
$R_1$ is R or an unsubstituted or substituted $C_1$-$C_{18}$-alkyl.

**Revendication**

Procédé de préparation d'objets moulés en polycarbonates par moulage par injection avec dégazage ou extrusion avec dégazage de polycarbonates thermoplastiques de poids moléculaire moyen $\overline{M}w$ 10 000 à 100 000, obtenus par réaction de diphénols avec du phosgène ou des diesters de l'acide carbonique, et qui peuvent être ramifiés, caractérisé en ce que ces polycarbonates thermoplastiques contiennent des phosphanes de formule générale I

$$(R)_2PR_1 \qquad (I)$$

en quantités de 0,01 à 0,1 % en poids,
R représentant un groupe aryle en $C_6$-$C_{14}$ non substitué ou substitué, et
$R_1$ représentant R ou un groupe alkyle en $C_1$-$C_{18}$ non substitué ou substitué.